# EUROPÄISCHE PATENTSCHRIFT

(11) **EP 0 463 422 B1**
(45) Veröffentlichungstag und Bekanntmachung des Hinweises auf die Patenterteilung: **10.11.1993**
(21) Anmeldenummer: 91109220.3
(22) Anmeldetag: 06.06.1991
(51) Int. Cl.: B23C 5/28

(54) **Aufnahme mit einem Dorn für Spanabhebende Maschinenwerkzeuge mit Innenbohrung und Maschinenwerkzeug**
Fixation with mandrel for chip cutting machine tools with internal hole and machine tool
Fixation avec mandrin pour outils de machine à enlèvement de copeaux avec trou interne et outil de machine

(30) Priorität: 19.06.1990 DE 4019506
(43) Veröffentlichungstag der Anmeldung: 02.01.1992
(73) Patentinhaber: Wilhelm Fette GmbH, D-21493 Schwarzenbek (DE)
(72) Erfinder: Oppelt, Klaus, W-2058 Lauenburg/Elbe (DE); Rohr, Olaf, W-2053 Sahms (DE)
(74) Vertreter: Minetti, Ralf, Dipl.-Ing.

(56) Entgegenhaltungen:
- DE-A- 3 104 752
- DE-A- 3 105 933
- GB-A- 820 308
- US-A- 3 597 817

## Beschreibung

Gegenstand der Erfindung bildet eine Aufnahme mit einem Dorn für spanabhebende Maschinenwerkzeuge mit Innenbohrung wie Fräwerkzeuge, Reibahlen, Gewindefräser und Bohrwerkzeuge sowie ein Maschinenwerkzeug mit Innenbohrung gemäß Oberbegriff des Patentanspruches, siehe hierzu DE-A 3104752.

Auch bei spanabhebenden Maschinenwerkzeugen mit Innenbohrung besteht das Bedürfnis danach, daß Kühlmittel durch die Aufnahme hindurch den Schneidkanten des Werkzeuges zuzuführen. Das setzt eine entsprechende Ausbildung sowohl des Aufnahmedornes wie auch des Werkzeuges selber voraus. Zweckmäßig ist es dabei, wenn die Fräsdornaufnahme einer Maschinenspindel so ausgebildet ist, daß auf ihr verschiedenartige Maschinenwerkzeuge wie Fräser oder Reibahlen zum Einsatz kommen können, bei denen ein Kühlmittel durch die Aufnahme hindurch den Spannuten zugeführt werden kann in der Art einer Innenkühlung.

Gemäß der Erfindung wird derartiges an einer Aufnahme gemäß Oberbegriff des Patentanspruches durch seine henzeichnenden Merhmale erreicht.

Die ringförmige Verteilernut liegt dabei auf der Außenseite des zylindrischen Dornes liegen, so daß die verschiedenartigen Werkzeuge nicht jeweils mit einer ringförmigen Verteilernut versehen zu sein brauchen. Es genügt eine im Aufnahmedorn angeordnete Kühlmittelleitung für eine Verteilung des Kühlmittels auf eine Vielzahl von Spannuten eines Werkzeuges.

Ein entsprechendes Ausführungsbeispiel der Erfindung ist nachstehend unter Bezugnahme auf eine Zeichnung erläutert. In der Zeichnung zeigen:

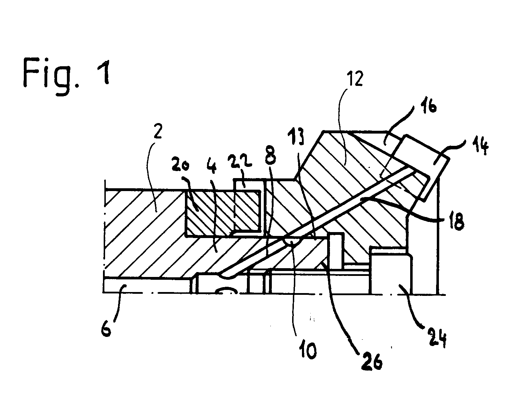

**Figur 1**: eine Aufnahme mit Fräswerkzeug im Schnitt

In der Figur 1 ist eine Aufnahme 2 für ein spanabhebendes Werkzeug 12 wiedergegeben, die einen zylindrischen Dorn 4 trägt.

Die Aufnahme 2 ist mit einer zentrisch angeordneten Bohrung 6 für die Zufuhr eines Kühlmittels versehen, von der im Bereich des Dornes 4 vier Kühlmittelkanäle 8 abführen, die in Richtung auf die Stirnseite 26 des Dornes 4 schräg nach außen gerichtet sind.

Auf dem Dorn 4 ist ein Fräswerkzeug 12 mit einer Innenbohrung 13 gelagert. Für die Mitnahme des Fräsers 12 ist ein ringförmiger Mitnehmer 20 vorgesehen, der sich mit Ansetzen in Kammern 22 des Fräsers erstreckt. Die Befestigung des Fräsers 12 erfolgt durch eine Schraube 24, die sich durch den Fräser hindurch in ein Innengewinde des Dornes 4 erstreckt.

Der Fräser 12 trägt eine Vielzahl von Wendeschneidplatten 14, vor denen bezogen auf die Drehrichtung jeweils eine Spannut 16 liegt. Für die Zufuhr von Kühlmitteln sind Kühlmittelkanäle 18 vorgesehen, die ausgehend von einer ringförmigen Verteilernut 10 nach außen zu den Spankammern 16 bzw. Wendeplatten 14 führen. Diese Kühlkanäle können abweichend zu der Darstellung in der Zeichnung schräg zu der Zeichnungsebene dergestalt verlaufen, daß sie auf die Wendeplatten 14 ausgerichtet verlaufen.

Sind abweichend von den Darstellungen der Zeichnung mehrere Wendeplatten 14 oder überhaupt Schneidplatten 14 an der Seite einer Spannut 16 angeordnet, so versteht es sich, daß die Kühlkanäle 18 Verzweigungen im Mündungsbereich aufweisen können oder eine größere Anzahl von Kühlkanälen vorgesehen sein kann, welche Kühlmittel allen Wendeplatten zuleiten.

## Patentansprüche

1. Aufnahme für spanabhebende Maschinenwerkzeuge mit einem Dorn mit Innenbohrung bei dem der zylindrische Dorn (4) mit mindestens einem sich von innen nach außen erstreckenden Kühlmittelkanal (8) versehen ist und das Werkzeug ges (12) sich radial erstreckende Kühlmittelbohrungen (18) aufweist, die zu Spannuten des Werkzeuge (12) führen, dadurch gekennzeichnet, daß der Kühlmittelkanal (8) des Dorns (4) in einer ringförmigen Verteilernut (10) mündet, die auf der Außenseite des zylindrischen Dornes (4) liegt, und daß das Werkzeug (12) ein Fräser mit Schneidplatten (14) ist, dessen radiale Kühlmittelkanäle (18) schräg zum Dorn (4) und schräg zu der Ebene der Schneidplatten (14) auf diese ausgerichtet sind.

## Claims

1. Fixation for chip cutting machine tools with a mandrel with internal hole for which the cylindrical mandrel (4) is equipped with at least one cooling agent canal (8) which extends from the inside to the outide and the tool (12) has cooling agent drill holes (18) which extend radially which lead to chucking grooves of the tool (12), characterized in that the cooling agent canal (8) of the mandrel (4) ends in an annular distribution groove (10) which is on the external side of the cylindrical mandrel (4) and that the tool (12) is a milling cutter with cutting plates (14), the radial cooling agent canals (18) of which are orientated aslant towards the mandrel (4) and towards the plane of the cutting plates (14) on these.

## Revendications

1. Fixation pour outils de machine à enlévement de copeaux avec un mandrin avec trou intérieur dans lequel le mandrin cylindrique (4) est équipé d'au moins un canal d'agent réfrigérant (8) qui s'étend de l'intérieur vers l'extérieur et l'outil (12) présente des forures d'agent réfrigérant (18) qui s'étendent radialement qui conduisent à des rainures de serrage de l'outil (12), caractérisée en ce que le canal d'agent réfrigérant (8) du mandrin (4) aboutit dans une rainure de distribution annulaire (10) qui se trouve sur la face extérieure du mandrin cylindrique (4) et que l'outil (12) est une fraise avec des plaques coupantes (14) dont les canaux radiaux d'agent réfrigérant (18) sont orientés en biais vers le mandrin (4) et en biais vers le plan des plaques coupantes (14) sur celles-ci.
